# DEMANDE DE BREVET EUROPEEN

(11) **EP 1 837 759 A1**
(43) Date de publication de la demande: **26.09.2007**
(21) Numéro de dépôt: 07104266.7
(22) Date de dépôt: 15.03.2007
(51) Int. Cl.: G06F 9/45

(54) **Procédé d'optimisation de l'écriture par un bloc maître dans un dispositif d'interfaçage de type FIFO entre ce bloc maître et un bloc esclave, et produit programme d'ordinateur correspondant**

(30) Priorité: 24.03.2006 FR 0602617
(71) Demandeur: ATMEL NANTES SA, 44306 Nantes Cédex 3 (FR)
(72) Inventeur: Garnier, Sylvain, 44300 Nantes (FR); Delalande, Thierry, 44300 Nantes (FR); Birsan, Laurentiu, 44340 Bouguenais (FR)
(74) Mandataire: Guéné, Patrick Lucien Juan Joseph

(57) **Abrégé**

L'invention concerne un procédé d'optimisation de l'écriture par un bloc maître dans un dispositif d'interfaçage entre ledit bloc maître et un bloc esclave, ledit bloc maître exécutant un code en langage machine obtenu à partir d'un code en langage assembleur comprenant une suite d'écritures unitaires permettant d'écrire des groupes de mots qui sont des instructions destinées à être lues et exécutées par ledit bloc esclave et comprenant chacune un mot de code opération et k mots d'opérande, avec k≥0, ledit bloc maître comprenant un bus d'écriture dont la taille est égale à N*T, avec T la taille d'un mot et N un entier supérieur ou égal à deux. Le procédé comprend une étape de transformation dudit code en langage assembleur, effectuée préalablement à l'obtention dudit code en langage machine et comprenant les étapes suivantes : transformation (71) de toutes les écritures unitaires statiques de plus d'un mot dudit code en langage assembleur en écritures unitaires statiques d'un mot ; recherche (72) de chaque ensemble de N écritures unitaires statiques successives d'un mot ; remplacement (74) dans ledit code en langage assembleur d'au moins un ensemble de N écritures unitaires statiques successives d'un mot par une écriture unitaire statique de N mots.

## Description

### 1. DOMAINE DE L'INVENTION

Le domaine de l'invention est celui des circuits électroniques.

Plus précisément, un mode de réalisation de l'invention concerne un procédé d'optimisation de l'écriture par un bloc maître dans un dispositif d'interfaçage permettant un interfaçage unidirectionnel entre ce bloc maître et un bloc esclave. Les blocs maître et esclave sont par exemple un microprocesseur et un co-processeur compris dans un codec audio.

On suppose que le bloc maître exécute un code en langage machine (ou L1G, pour « Langage de 1^{ère} Génération ») obtenu à partir d'un code en langage assembleur (ou L2G, pour « Langage de 2^{ème} Génération ») comprenant une suite d'écritures unitaires permettant d'écrire des groupes de mots. Ces groupes de mots sont des instructions destinées à être lues et exécutées par le bloc esclave et comprenant chacune un mot de code opération (ou « opcode ») et k mots d'opérande (ou « mots de données), avec k≥0. Les groupes de mots possèdent donc des tailles variables, de 1 mot à k+1 mots.

On suppose également que le bloc maître, qui écrit les groupes de mots dans le dispositif d'interfaçage, comprend un bus d'écriture (aussi appelé bus d'interface) dont la taille est égale à N*T, avec N un entier supérieur ou égal à deux.

Le dispositif d'interfaçage de type FIFO permet une élasticité dans l'exécution du code microprocesseur et du code co-processeur. De façon classique, il comprend un plan mémoire géré selon un mode « premier entré premier sorti » (ou FIFO, pour « First In First Out » en anglais), avec des pointeurs d'écriture et de lecture. Ce plan mémoire permet de stocker des mots venant du bloc maître, via un bus d'entrée. Le dispositif d'interfaçage (aussi appelé « mémoire FIFO » par la suite) comprend également un banc de registres de sortie pouvant contenir des mots lus dans le plan mémoire, et fournissant un signal de sortie pouvant être lu par le bloc esclave. Il reçoit des requêtes de lecture provenant du bloc esclave et des requêtes d'écriture provenant du bloc maître.

Le procédé selon un mode de réalisation de l'invention s'applique notamment, mais non exclusivement, dans le cas où le dispositif d'interfaçage, le bloc maître et le bloc esclave sont du type présentés dans la demande de brevet français n° FR 0507988, déposée le 26 juillet 2005 par le déposant de la présente demande de brevet.

### 2. ART ANTÉRIEUR

On présente maintenant les inconvénients de l'art antérieur, à travers l'application particulière précitée, dans laquelle les blocs maître et esclave sont respectivement un microprocesseur (aussi appelé CPU par la suite) et un co-processeur (aussi appelé DSP par la suite), et dans laquelle les groupes de mots de taille variable sont des instructions que le microprocesseur transmet, via le dispositif d'interfaçage, au co-processeur afin qu'il les exécute. Il est clair cependant que cette discussion peut être généralisée à tous types de blocs maître et esclave.

On rappelle que, pour l'écriture de mots dans le plan mémoire du dispositif d'interfaçage, le microprocesseur envoie des requêtes d'écriture et place des mots sur le bus d'entrée du dispositif d'interfaçage. Pour la lecture de mots, le co-processeur envoie des requêtes de lecture et lit des mots sur le bus de sortie du dispositif d'interfaçage.

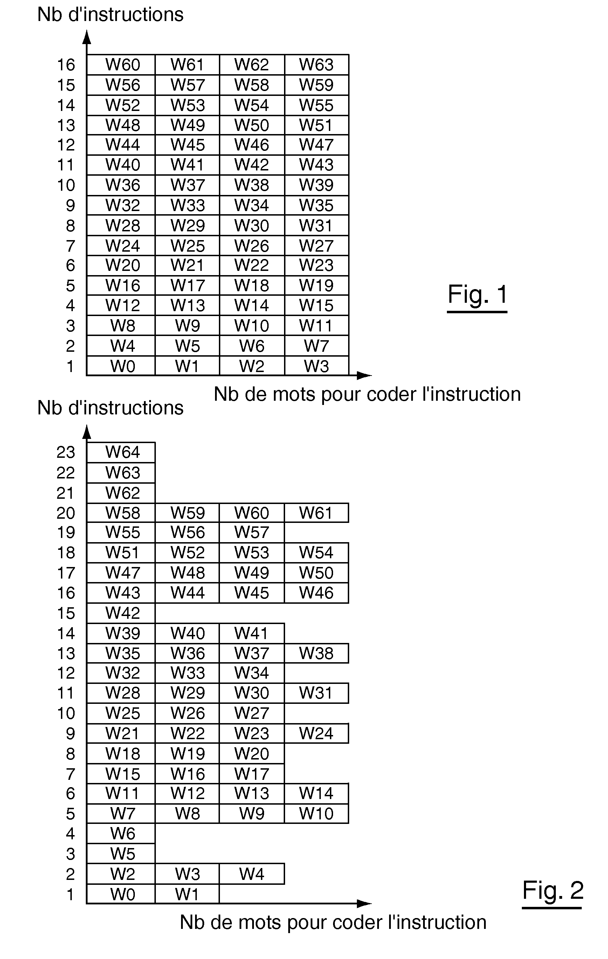

Traditionnellement, on utilise des mots de bourrage (mécanisme de « stuffing ») pour gérer l'alignement, dans le plan mémoire du dispositif d'interfaçage, des mots lus par le co-processeur. En effet, le dispositif d'interfaçage doit stocker dans son plan mémoire des instructions de taille variable, et les restituer en respectant un alignement, de façon que pour chaque instruction le co-processeur reçoive le mot de code opération (opcode) suivi éventuellement d'un ou plusieurs mots d'opérande qui doivent être alignés correctement dans son registre d'instruction. La **figure 1** illustre cette technique traditionnelle de gestion de l'alignement, avec un exemple de plan mémoire d'une mémoire FIFO standard (dispositif d'interfaçage) de taille 64 mots. Dans le cas d'une mémoire FIFO standard, les dimensions sont fixées. Le nombre de lignes de mots de n bits est figé en hardware. Chaque ligne comprend un nombre déterminé de mots, égal à la taille maximale d'une instruction. Ainsi, dans l'exemple de la figure 1, il y a 16 lignes de 4 mots chacune (on suppose dans cet exemple qu'une instruction comprend 4 mots au maximum). Afin de gérer l'alignement des mots dans le plan mémoire, le microprocesseur écrit systématiquement 4 mots dans le plan mémoire pour chacune des instructions successives, quelle que soit la taille réelle de l'instruction. Pour cela, le microprocesseur complète le ou les mots de chaque instruction avec un ou plusieurs mots de bourrage. Ainsi, dans le cas d'une mémoire FIFO standard, les données sont déjà alignées à la sortie si la mémoire FIFO fournit les informations de manière parallèle (c'est-à-dire en fournissant les mots 4 par 4, dans l'exemple précité).

Il apparaît que cette technique traditionnelle de gestion de l'alignement ne constitue pas une solution optimale pour permettre une élasticité maximale du remplissage du plan mémoire du dispositif d'interfaçage par le microprocesseur. En effet, l'utilisation de mots de bourrage empêche une utilisation totale de l'espace mémoire pour les seuls mots des instructions. En outre, cela augmente le nombre d'accès en écriture que doit effectuer le microprocesseur.

Pour cette raison, il a été proposé dans la demande de brevet français n° FR 0507988 précitée, une technique alternative ne nécessitant pas que les groupes de mots soient alignés dans le plan mémoire du dispositif d'interfaçage, et donc ne nécessitant pas d'utiliser des mots de bourrage. Le principe général de cette technique alternative consiste à gérer l'acquittement de chaque requête de lecture (formulée par le co-processeur) en tenant compte de la taille du groupe de mots dont cette requête requiert la lecture (cette taille étant fournie par le bloc esclave). La **figure 2** est une représentation d'un exemple de remplissage d'un plan mémoire d'un dispositif d'interfaçage, selon cette technique alternative, de taille 64 mots. On alloue à une instruction le nombre exact d'emplacements physiques de la mémoire qui sont nécessaires pour stocker les mots de cette instruction (pas de mot de bourrage). On voit ainsi sur la figure 2, par comparaison avec la figure 1, que dans le cas où les deux plans mémoires de même taille sont dans un état plein (64 mots utilisés), le plan mémoire du dispositif d'interfaçage selon la technique alternative contient plus de commandes que celui de la technique traditionnelle.

Il a également été proposé, dans un mode de réalisation particulier de la technique alternative précitée, que le microprocesseur dispose de plusieurs bus d'écriture de tailles différentes. Ainsi, on optimise les temps d'écriture (temps de chargement) dans le dispositif d'interfaçage par le microprocesseur, en tenant compte du fait que le code en langage assembleur (code L2G) du microprocesseur comprend des écritures unitaires de tailles variables. Ceci résulte de ce que l'écriture du code du microprocesseur se fait généralement avec un langage de haut niveau (ou L3G, pour « Langage de 3^{ème} Génération », par exemple le langage C), car la complexité des algorithmes ne permet pas d'écrire du code directement optimisé. Puis, ce code L3G est compilé pour obtenir le code en langage assembleur (code L2G) à partir duquel est obtenu le code en langage machine (code L1G) exécuté par le microprocesseur. D'une façon pratique, on écrit à l'aide de macro-fonctions du langage L3G les instructions du co-processeur. Ces macro-fonctions sont par la suite remplacées, dans le langage L2G, par des écritures unitaires de tailles variables.

Ainsi par exemple, dans le cas d'un microprocesseur 8 bits et un co-processeur 4 bits, les instructions du co-processeur constituent des groupes de mots de 4 bits, de longueur variable. Typiquement, chaque groupe de mots comprend un mot d'opcode de 4 bits, suivi de zéro, un, deux ou trois mots d'opérande de 4 bits (c'est-à-dire k=3, avec la notation précitée). Si le microprocesseur dispose de deux bus d'écriture de 4 et 8 bits respectivement, il peut pour écrire les mots composant une instruction utiliser soit des écritures unitaires de 4 bits (c'est-à-dire des écritures unitaires d'un mot), soit des écritures unitaires de 8 bits (c'est-à-dire des écritures unitaires de deux mots). Ceci implique que l'interface du dispositif d'interfaçage possède deux entrées distinctes, pour des écritures de 4 et 8 bits respectivement. En d'autres termes, la suite d'écritures unitaires comprises dans le code L2G, comprend des écritures unitaires de 4 bits (« write_4b(...) ») et des écritures unitaires de 8 bits (« write_8b(...) »).

Cependant, les inventeurs de la présente invention ont fait apparaître que la technique alternative précitée, même dans le mode de réalisation particulier où le microprocesseur (bloc maître) dispose de plusieurs bus d'écriture de tailles différentes, n'est pas encore optimale.

En effet, ils ont démontré qu'il peut exister, pour une suite d'écritures unitaires, une suite équivalente pour le bloc esclave (qui va lire les groupes de mots écrits dans le dispositif d'interfaçage grâce à cette suite d'écritures unitaires) mais plus efficace en terme d'écriture par le bloc maître.

### 3. OBJECTIFS DE L'INVENTION

L'invention, dans au moins un mode de réalisation, a notamment pour objectif de pallier ces différents inconvénients de l'état de la technique.

Plus précisément, l'un des objectifs de la présente invention, dans au moins un mode de réalisation, est de fournir un procédé d'optimisation de l'écriture par un bloc maître dans un dispositif d'interfaçage entre ce bloc maître et un bloc esclave, permettant de minimiser le nombre d'écritures unitaires que le bloc maître effectue dans le dispositif d'interfaçage.

L'invention a également pour objectif, dans au moins un mode de réalisation de l'invention, de fournir un tel procédé qui soit simple à mettre en oeuvre et peu coûteux.

Un autre objectif de l'invention, dans au moins un mode de réalisation de l'invention, est de fournir un tel procédé qui permette de favoriser le parallélisme des traitements effectués par le bloc maître et le bloc esclave.

### 4. EXPOSÉ DE L'INVENTION

Dans un mode de réalisation particulier de l'invention, il est proposé un procédé d'optimisation de l'écriture par un bloc maître dans un dispositif d'interfaçage entre ledit bloc maître et un bloc esclave, ledit bloc maître exécutant un code en langage machine (L1G) obtenu à partir d'un code en langage assembleur (L2G) comprenant une suite d'écritures unitaires permettant d'écrire des groupes de mots qui sont des instructions destinées à être lues et exécutées par ledit bloc esclave et comprenant chacune un mot de code opération et k mots d'opérande, avec k≥0, ledit bloc maître comprenant un bus d'écriture dont la taille est égale à N*T, avec T la taille d'un mot et N un entier supérieur ou égal à deux. Le procédé comprend une étape de transformation dudit code en langage assembleur, effectuée préalablement à l'obtention dudit code en langage machine et comprenant les étapes suivantes :
- transformation de toutes les écritures unitaires statiques de plus d'un mot dudit code en langage assembleur en écritures unitaires statiques d'un mot ;
- recherche de chaque ensemble de N écritures unitaires statiques successives d'un mot ;
- remplacement dans ledit code en langage assembleur d'au moins un ensemble de N écritures unitaires statiques successives d'un mot par une écriture unitaire statique de N mots.

Ainsi, dans ce mode de réalisation particulier, l'invention repose sur une approche tout à fait nouvelle et inventive consistant à minimiser le nombre total d'écritures unitaires comprises dans le code en langage assembleur (L2G) du bloc maître, grâce à une maximisation du nombre d'écritures unitaires statiques de N mots. Le code en langage machine (L1G) est obtenu à partir de ce code L2G optimisé. En d'autres termes, on optimise le débit d'un flux de données entre le bloc maître et le bloc esclave.

D'une façon générale, ce concept innovant s'applique pour tous les couples bloc maître / bloc esclave dont la taille du bus d'écriture est N fois supérieur à la taille du registre d'instruction du bloc esclave, avec N un entier supérieur ou égale à deux.

Dans un premier mode de réalisation particulier de l'invention, ladite étape de remplacement est telle que chaque ensemble de N écritures unitaires statiques successives d'un mot est remplacé par une écriture unitaire statique de N mots.

Dans ce premier mode de réalisation, la mise en oeuvre est très simple puisqu'on ne tient pas compte de la linéarité du code du bloc maître.

Dans un second mode de réalisation particulier de l'invention, le procédé comprend en outre l'étape suivante, qui suit l'étape de recherche : pour chaque ensemble de N écritures unitaires statiques successives d'un mot, analyse de la portion de code en langage assembleur comprise entre la première et la dernière desdites N écritures unitaires statiques successives d'un mot, afin de détecter au moins une non-linéarité dans ladite portion de code en langage assembleur. En outre, ladite étape de remplacement est telle que, pour chaque ensemble de N écritures unitaires statiques successives d'un mot :
- si au moins une non-linéarité est détectée, ladite portion de code en langage assembleur n'est pas modifiée ;
- si aucune non-linéarité n'est détectée, ladite portion de code en langage assembleur est modifiée par remplacement dudit ensemble de N écritures unitaires statiques successives d'un mot par une écriture unitaire statique de N mots.

Dans ce second mode de réalisation, on tient compte de la linéarité du code du bloc maître. Ainsi, on anticipe l'écriture d'instructions pour favoriser la parallélisation de l'exécution des codes des blocs maître et esclave.

Selon une caractéristique avantageuse, ladite au moins une non-linéarité dans ladite portion de code en langage assembleur appartient au groupe comprenant :
- des instructions de saut atteignant un point d'arrivée situé en dehors de ladite portion de code en langage assembleur ;
- des points d'arrivée de sauts effectués depuis l'extérieur de ladite portion de code en langage assembleur ;
- des écritures dynamiques.

Selon une caractéristique particulière, N est égal à deux.

Dans une application particulière, le bloc maître est un microprocesseur et le bloc esclave un coprocesseur.

Dans cette application particulière, l'optimisation des écritures est particulièrement efficace du fait que le microprocesseur écrit des instructions qui constituent par nature des écritures statiques.

Dans un autre mode de réalisation, l'invention concerne un produit programme d'ordinateur téléchargeable depuis un réseau de communication et/ou enregistré sur un support lisible par ordinateur et/ou exécutable par un processeur, ledit produit programme d'ordinateur comprenant des instructions de code de programme pour l'exécution des étapes du procédé précité d'optimisation de l'écriture, lorsque ledit programme est exécuté sur un ordinateur.

### 5. LISTE DES FIGURES

D'autres caractéristiques et avantages de modes de réalisation de l'invention apparaîtront à la lecture de la description suivante d'un mode de réalisation préférentiel de l'invention, donné à titre d'exemple indicatif et non limitatif (tous les modes de réalisation de l'invention ne sont pas limités aux caractéristiques et avantages de ce mode de réalisation préférentiel), et des dessins annexés, dans lesquels :
- la figure 1 est une représentation d'un exemple de plan mémoire d'un dispositif d'interfaçage (mémoire FIFO standard) de taille 64 mots, rempli selon une technique connue utilisant des mots de bourrage ;
- la figure 2 est une représentation d'un exemple de plan mémoire d'un dispositif d'interfaçage (mémoire FIFO standard) de taille 64 mots, rempli selon une technique connue n'utilisant pas de mots de bourrage ;
- la figure 3 présente un synoptique d'un exemple de système dans lequel un dispositif d'interfaçage est placé entre un bloc maître et un bloc esclave, et dans lequel le bloc maître exécute un code résultant de la mise en oeuvre du procédé selon l'invention ;
- la figure 4 illustre un exemple d'obtention d'un code machine à partir d'un code haut niveau, avec mise en oeuvre du procédé selon l'invention ;
- la figure 5 présente un organigramme d'un premier mode de réalisation particulier du procédé selon l'invention ;
- la figure 6 présente un exemple de code L2G optimisé par mise en oeuvre du procédé de la figure 5 ;
- la figure 7 présente un organigramme d'un second mode de réalisation particulier du procédé selon l'invention ; et
- la figure 8 présente un exemple de code L2G optimisé par mise en oeuvre du procédé de la figure 7.

### 6. DESCRIPTION DÉTAILLÉE

Les figures 1 et 2 sont relatives à l'art antérieur et ont déjà été décrites ci-dessus.

Sur toutes les figures du présent document, les éléments et étapes identiques sont désignés par une même référence numérique.

Par ailleurs, on adopte les définitions suivantes :
- on appelle écriture statique une écriture d'une donnée statique (constante) dans le code (exemple : « write_to_slave(0x33) ») ;
- on appelle écriture dynamique une écriture d'une variable du code (exemple : « write_to_slave(variable_temp) »).

L'invention concerne donc un procédé d'optimisation de l'écriture par un bloc maître dans un dispositif d'interfaçage entre ce bloc maître et un bloc esclave. Le bloc maître exécute un code en langage machine (L1G) obtenu à partir d'un code en langage assembleur (L2G) comprenant une suite d'écritures unitaires permettant d'écrire des groupes de mots. Les groupes de mots sont des instructions destinées à être lues et exécutées par le bloc esclave et comprenant chacune un mot de code opération et k mots d'opérande, avec k≥0. Le bloc maître comprend un bus d'écriture dont la taille est égale à N*T, avec T la taille d'un mot et N un entier supérieur ou égal à deux.

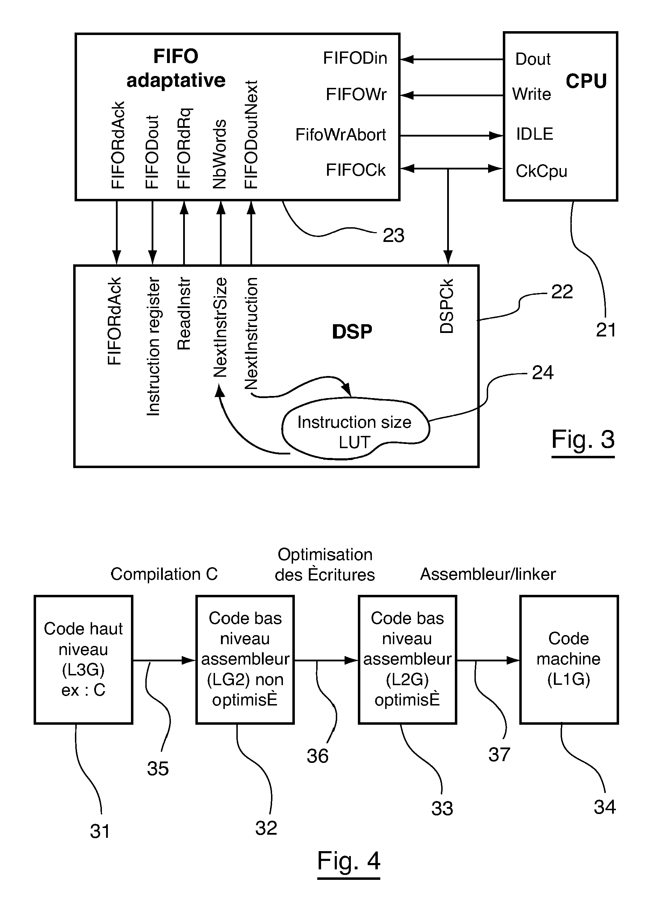

On présente maintenant, en relation avec la **figure 4**, le stade où intervient plus précisément la présente invention dans le processus de génération d'un code en langage machine (code L1G) destiné à être exécuté par le bloc maître.

De façon classique, on écrit (c'est-à-dire on conçoit et on développe) un code avec un langage de haut niveau (code L3G), par exemple le langage C (ou tout autre langage L3G). Puis, ce code L3G (référencé 31) est compilé pour obtenir un code en langage assembleur (code L2G) (référencé 32). Cette étape de compilation est représentée par la flèche référencée 35.

Selon l'invention, ce code L2G est transformé en un code L2G optimisé (référencé 33). Cette étape de transformation est représentée par la flèche référencée 36. Puis, ce code L2G optimisé est converti (par exemple par un assembleur) en un code en langage machine (code L1G) (référencé 34). Cette étape de conversion est représentée par la flèche référencée 37.

Pour mémoire, dans l'art antérieur, le code L1G est obtenu directement à partir du code L2G.

L'invention peut notamment, mais non exclusivement, être mise en oeuvre dans un système tel qu'illustré sur la **figure 3**, dans lequel le dispositif d'interfaçage 23 (aussi appelé FIFO adaptative), le bloc maître 21 et le bloc esclave 22 sont du type présentés dans la demande de brevet français n° FR 0507988 précitée, et où les blocs maître et esclave sont un microprocesseur 21 (aussi appelé CPU) et un co-processeur 22 (aussi appelé DSP) respectivement. Dans ce cas, le microprocesseur 21 exécute un code résultant de la mise en oeuvre du procédé selon l'invention.

Par exemple, les groupes de mots sont des instructions comprenant un mot de code opération de 4 bits, et zéro, un, deux ou trois mots d'opérande de 4 bits (c'est-à-dire k=3, avec la notation précitée). Le co-processeur 22 est un co-processeur 4 bits et le microprocesseur 21 un microprocesseur 8 bits comprenant un bus d'écriture de 8 bits (c'est-à-dire T=4 bits et N=2, avec les notations précitées).

On rappelle maintenant brièvement le fonctionnement du système illustré sur la figure 3. Pour plus de détails, il convient de se reporter au texte et aux dessins de la demande de brevet français n° FR 0507988 précitée.

Le microprocesseur 21 écrit sur le bus d'entrée FIFODin la donnée et positionne FIFOWr à '1'. La donnée est alors écrite dans le plan mémoire du dispositif d'interfaçage 23. Dans le cas où le plan mémoire est plein, le signal d'annulation d'écriture FIFOWrAbort est positionné à '1'. Le microprocesseur doit alors faire redescendre sa requête d'écriture FIFOWr à '0'.

La lecture par le co-processeur 22 se fait lorsque l'entrée FIFORdRq est positionnée à '1'. La donnée peut être lue à la sortie de FIFODout lorsque le signal d'acquittement de requête de lecture FifoRdAck vaut '1', c'est-à-dire si un nombre de mots au moins égal à la taille (NbWords) de l'instruction associée à cette requête de lecture est disponible sur le signal de sortie (FIFODout). NbWords est une information qui donne la taille de la prochaine instruction à lire, calée sur les octets de poids forts de FiFODoutNext. Le dispositif d'interfaçage 23 fournit au co-processeur 22 le signal FIFODoutNext, de façon que, pendant que le dispositif d'interfaçage sert une requête de lecture courante, le co-processeur puisse de manière anticipée obtenir une valeur présumée de l'instruction associée à une requête de lecture suivante et fournir au dispositif d'interfaçage la taille (NbWords) de l'instruction associée à cette requête de lecture suivante. Le co-processeur obtient la taille de l'instruction suivante en décodant le mot d'opcode de l'instruction suivante (présente sur FIFODoutNext), puis en utilisant le mot d'opcode décodé pour interroger une table de correspondance (LookUp Table) entre les mots d'opcode et les tailles d'instruction (mécanisme référencé 24).

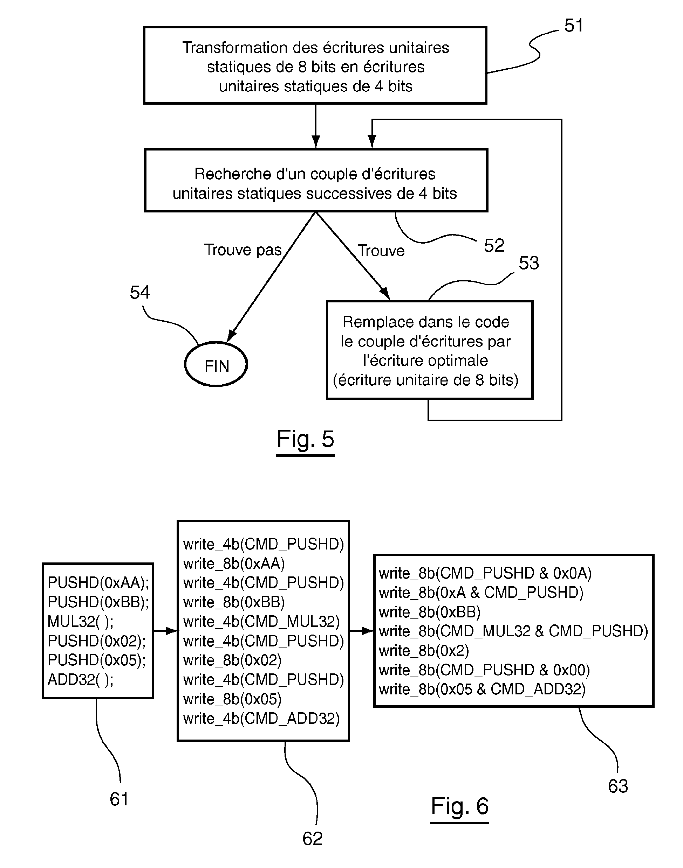

On présente maintenant, en relation avec l'organigramme de la **figure 5**, un premier mode de réalisation particulier du procédé selon l'invention, et plus précisément de l'étape (référencée 36 sur la figure 4) de transformation du code L2G en un code L2G optimisé.

Cette étape de transformation est par exemple exécutée sur un ordinateur de CAO (Conception Assistée par Ordinateur), lors de la conception et le développement du code du microprocesseur.

On détaille désormais les étapes comprises dans l'étape de transformation, en se plaçant à nouveau dans le contexte de l'exemple précité : co-processeur 4 bits ; microprocesseur 8 bits comprenant un bus d'écriture de 8 bits ; instructions comprenant un mot de code opération de 4 bits, et zéro, un, deux ou trois mots d'opérande de 4 bits. En d'autres termes, on suppose que le code L2G comprend deux types d'écritures unitaires : des écritures unitaires de 4 bits (« write_4b(...) ») et des écritures unitaires de 8 bits (« write_8b(...) »).

Dans une étape 51, on transforme chacune des écritures unitaires statiques de 8 bits du code L2G en deux écritures unitaires statiques de 4 bits.

Dans une étape 52, on recherche un couple d'écritures unitaires statiques successives de 4 bits. Il est à noter qu'on ne joue pas sur les écritures dynamiques car par définition une écriture dynamique écrit le contenu d'une variable dont la valeur est issue d'un algorithme et change dans le temps, et ne peut donc pas être optimisée statiquement.

Si un couple est trouvé à l'étape 52, on passe à une étape 53 dans laquelle on remplace, dans le code L2G, ce couple par une écriture unitaire statique de 8 bits. Puis, on revient à l'étape 52, pour rechercher un autre couple d'écritures unitaires statiques successives de 4 bits.

Si aucun couple n'est trouvé à l'étape 52, on passe à une étape de fin 54.

La **figure 6** présente un exemple de code L2G optimisé par mise en oeuvre du procédé de la figure 5.

Plus précisément, cette figure 6 illustre un exemple de code C, référencé 61, comprenant six macro-fonctions décrivant des instructions du co-processeur: PUSHD(0xAA), PUSHD(0xBB), MUL32(), PUSHD(0x02), PUSHD(0x05) et ADD32(). Après compilation, on obtient un code L2G, référencé 62, dans lequel les six macro-fonctions précitées ont été remplacées par des écritures unitaires de tailles variables : six écritures unitaires de 4 bits et quatre écritures unitaires de 8 bits. Après transformation selon le mode de réalisation de l'invention illustré sur la figure 5, on obtient un code L2G optimisé, référencé 63, comprenant sept écritures unitaires de 8 bits. Il y a donc bien réduction du nombre total d'écritures unitaires.

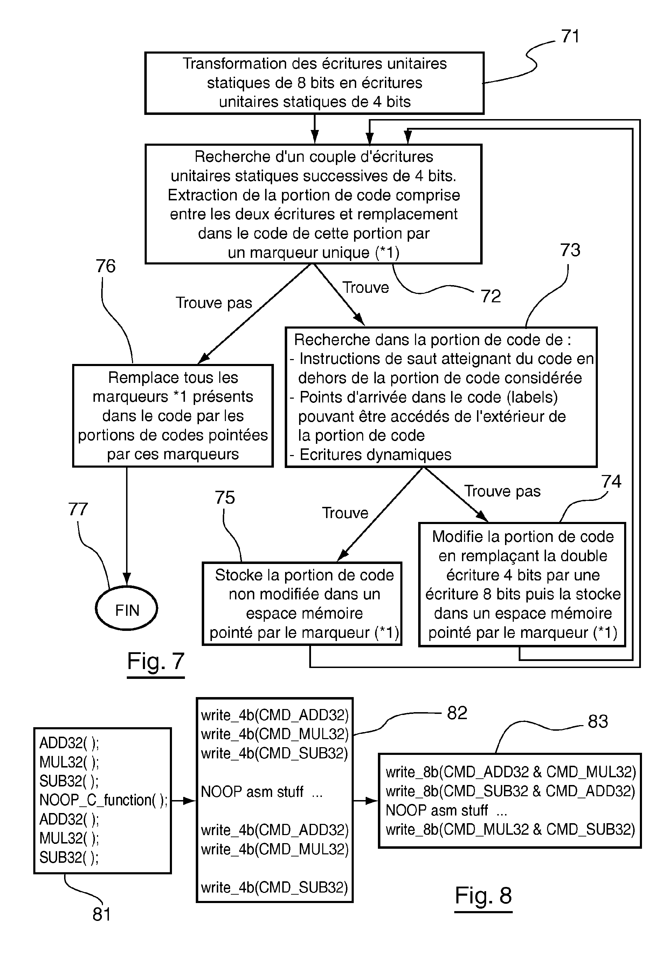

On présente maintenant, en relation avec l'organigramme de la **figure 7**, un second mode de réalisation particulier du procédé selon l'invention, et plus précisément de l'étape (référencée 36 sur la figure 4) de transformation du code L2G en un code L2G optimisé.

Ce second mode de réalisation se distingue du premier en ce qu'il tient compte de la linéarité du code pour apparier des écritures unitaires éloignées dans le code. En effet, le code généré n'est pas entièrement linéaire car il existe des boucles, des sauts conditionnels ou non conditionnels qui cassent la linéarité du code.

Globalement, on anticipe l'écriture d'instructions (commandes) pour favoriser la parallélisation des codes microprocesseur et co-processeur. En effet, en anticipant les écritures dans le dispositif d'interfaçage, des optimisations supplémentaires peuvent être trouvées. Plus on anticipe l'écriture des instructions du co-processeur, plus on parallélise l'exécution des codes microprocesseur et co-processeur (à condition de ne pas être dans le cas où le dispositif d'interfaçage est plein, ce qui induit des mécanismes d'attente).

Dans une étape 71, on transforme chacune des écritures unitaires statiques de 8 bits du code L2G en deux écritures unitaires statiques de 4 bits.

Dans une étape 72, on recherche un couple d'écritures unitaires statiques successives de 4 bits. En outre, on extrait la portion de code comprise entre les deux écritures du couple et on remplace cette portion dans le code par un marqueur unique (par exemple « * 1 »).

Si un couple est trouvé à l'étape 72, on passe à une étape 73 dans laquelle on détecte au moins une non-linéarité dans la portion de code extraite. Par non-linéarités, on entend :
- des instructions de saut atteignant dans le code un point d'arrivée situé en dehors de la portion de code extraite ;
- des points d'arrivée (aussi appelés labels) de sauts effectués depuis l'extérieur de la portion de code extraite ;
- des écritures dynamiques.

Si aucune non-linéarité n'est détectée à l'étape 73, on passe à une étape 74 dans laquelle on modifie la portion de code extraite, en remplaçant le couple d'écritures unitaires statiques successives de 4 bits par une écriture unitaire statique de 8 bits. Puis, on stocke la portion de code modifiée dans un espace mémoire pointé par le marqueur précité. Enfin, on revient à l'étape 72, pour rechercher un autre couple d'écritures unitaires statiques successives de 4 bits.

Si au moins une non-linéarité est détectée à l'étape 73, on passe à une étape 75 dans laquelle on ne modifie pas la portion de code extraite et on la stocke dans un espace mémoire pointé par le marqueur précité. Puis, on revient à l'étape 72, pour rechercher un autre couple d'écritures unitaires statiques successives de 4 bits.

Si aucun couple n'est trouvé à l'étape 72, on passe à une étape 76 dans laquelle on remplace tous les marqueurs présents dans le code par les portions de code pointées par ces marqueurs. Puis, on passe à l'étape de fin 77.

Ainsi, les couples d'écritures qui peuvent être appariées bien que distantes dans le code concernent uniquement des écritures statiques, dont la portion de code qui est comprise entre les deux ne contient pas de non-linéarité. Ce qui importe c'est la linéarité du code. Si des sauts ont lieu dans la portion extraite mais que les écritures de part et d'autre de la portion extraite se réalisent de manière successive et certaine, alors on peut apparier les deux écritures.

La **figure 8** présente un exemple de code L2G optimisé par mise en oeuvre du procédé de la figure 7.

Plus précisément, cette figure 8 illustre un exemple de code C, référencé 81, comprenant sept macro-fonctions :
- six d'entre elles décrivent des instructions du co-processeur : ADD32(), MUL32(), SUB32(), ADD32(), MUL32() et SUB32() ;
- une d'entre elles est neutre du point de vue du dispositif d'interfaçage et ne décrit donc pas une instruction du co-processeur : NOOP_C_mnction().

Après compilation, on obtient un code L2G, référencé 82, dans lequel les six macro-fonctions décrivant des instructions du co-processeur ont été remplacées par six écritures unitaires de 4 bits, et la macro-fonction neutre du point de vue du dispositif d'interfaçage a été remplacée par du code assembleur noté « NOOP asm stuff... ».

Après transformation selon le mode de réalisation de l'invention illustré sur la figure 7, on obtient un code L2G optimisé, référencé 83, comprenant trois écritures unitaires de 8 bits et le code assembleur noté « NOOP asm stuff... ». Il y a donc bien réduction du nombre total d'écritures unitaires.

Il est à noter que les écritures unitaires de 4 bits notées « write_4b(CMD_SUB32) » et « write_4b(CMD_ADD32) » ont pu être remplacées par une écriture unitaire de 8 bits notée « write_8b(CMD_SUB32 & CMD_ADD32) » car la portion de code comprise entre ces deux écritures unitaires de 4 bits (à savoir le code assembleur noté « NOOP asm stuff... ») ne comprend pas de non-linéarité au sens précité.

On notera que l'invention ne se limite pas à une implantation purement matérielle mais qu'elle peut aussi être mise en oeuvre sous la forme d'une séquence d'instructions d'un programme informatique ou toute forme mixant une partie matérielle et une partie logicielle. Dans le cas où l'invention est implantée partiellement ou totalement sous forme logicielle, la séquence d'instructions correspondante pourra être stockée dans un moyen de stockage amovible (tel que par exemple une disquette, un CD-ROM ou un DVD-ROM) ou non, ce moyen de stockage étant lisible partiellement ou totalement par un ordinateur ou un microprocesseur.

Il est clair que de nombreux autres modes de réalisation de l'invention peuvent être envisagés. On peut notamment prévoir d'autres valeurs pour les paramètres suivants :
- k (égal à 3 dans l'exemple ci-dessus), définissant le nombre maximal de mots d'opérande que peut comprendre une instructions exécutée par le bloc esclave ;
- T (égal à 4 bits dans l'exemple ci-dessus), définissant la taille d'un mot ; et
- N (égal à 2 dans l'exemple ci-dessus), définissant le rapport entre d'une part la taille d'un bus d'écriture compris dans le bloc maître et d'autre part la taille d'un mot d'instruction (c'est-à-dire la taille du registre d'instruction utilisé par le bloc esclave).

## Revendications

1. Procédé d'optimisation de l'écriture par un bloc maître (21) dans un dispositif d'interfaçage (23) entre ledit bloc maître et un bloc esclave (22), ledit bloc maître exécutant un code en langage machine (34) obtenu à partir d'un code en langage assembleur (32) comprenant une suite d'écritures unitaires permettant d'écrire des groupes de mots qui sont des instructions destinées à être lues et exécutées par ledit bloc esclave et comprenant chacune un mot de code opération et k mots d'opérande, avec k≥0, ledit bloc maître comprenant un bus d'écriture dont la taille est égale à N*T, avec T la taille d'un mot et N un entier supérieur ou égal à deux,
procédé **caractérisé en ce qu'**il comprend une étape (36) de transformation dudit code en langage assembleur, effectuée préalablement à l'obtention (37) dudit code en langage machine et comprenant les étapes suivantes :
- transformation (51 ; 71) de toutes les écritures unitaires statiques de plus d'un mot dudit code en langage assembleur en écritures unitaires statiques d'un mot ;
- recherche (52 ; 72) de chaque ensemble de N écritures unitaires statiques successives d'un mot ;
- remplacement (53 ; 74) dans ledit code en langage assembleur d'au moins un ensemble de N écritures unitaires statiques successives d'un mot par une écriture unitaire statique de N mots.

2. Procédé selon la revendication 1, **caractérisé en ce que** ladite étape de remplacement (54) est telle que chaque ensemble de N écritures unitaires statiques successives d'un mot est remplacé par une écriture unitaire statique de N mots.

3. Procédé selon la revendication 1, **caractérisé en ce qu'**il comprend en outre l'étape suivante (73), qui suit l'étape de recherche (72) :
- pour chaque ensemble de N écritures unitaires statiques successives d'un mot, analyse de la portion de code en langage assembleur comprise entre la première et la dernière desdites N écritures unitaires statiques successives d'un mot, afin de détecter au moins une non-linéarité dans ladite portion de code en langage assembleur ;
et **en ce que** ladite étape de remplacement est telle que, pour chaque ensemble de N écritures unitaires statiques successives d'un mot :
- si au moins une non-linéarité est détectée, ladite portion de code en langage assembleur n'est pas modifiée (75) ;
- si aucune non-linéarité n'est détectée, ladite portion de code en langage assembleur est modifiée par remplacement dudit ensemble de N écritures unitaires statiques successives d'un mot par une écriture unitaire statique de N mots (74).

4. Procédé selon la revendication 3, **caractérisé en ce que** ladite au moins une non-linéarité dans ladite portion de code en langage assembleur appartient au groupe comprenant :
- des instructions de saut atteignant un point d'arrivée situé en dehors de ladite portion de code en langage assembleur ;
- des points d'arrivée de sauts effectués depuis l'extérieur de ladite portion de code en langage assembleur ;
- des écritures dynamiques.

5. Procédé selon l'une quelconque des revendications 1 à 4, **caractérisé en ce que** N est égal à deux.

6. Procédé selon l'une quelconque des revendications 1 à 5, **caractérisé en ce que** le bloc maître (21) est un microprocesseur et le bloc esclave (22) un coprocesseur.

7. Produit programme d'ordinateur téléchargeable depuis un réseau de communication et/ou enregistré sur un support lisible par ordinateur et/ou exécutable par un processeur **caractérisé en ce qu'**il comprend des instructions de code de programme pour l'exécution des étapes du procédé d'au moins une des revendications 1 à 6, lorsque ledit programme est exécuté sur un ordinateur.
